# EUROPEAN PATENT SPECIFICATION

(11) **EP 1 464 372 B1**
(45) Date of publication and mention of the grant of the patent: **28.01.2009**
(21) Application number: 04251971.0
(22) Date of filing: 01.04.2004
(51) Int. Cl.: B01D 29/01, B01D 46/52

(54) **Filter elements having injection molded thermoplastic seals and methods of making same**
Filterelemente mit in Spritzgussverfahren hergestellten thermoplastischen Dichtungen sowie Herstellungsverfahren dafür
Eléments filtrants comprenant des joints thermoplastiques obtenus par un procédé de moulage par injection et méthodes pour les obtenir

(30) Priority: 02.04.2003 US 404109; 23.01.2004 US 762240
(43) Date of publication of application: 06.10.2004
(73) Proprietor: Wix Filtration Corp LLC, Gastonia NC 28054 (US)
(72) Inventor: Kirsch, Mark T., Mount Holly North Carolina 28120 (US)
(74) Representative: Style, Kelda Camilla Karen

(56) References cited:
- EP-A- 1 129 760
- DE-A- 10 111 118
- US-A- 5 667 545
- US-A- 5 902 361
- US-B1- 6 406 509
- PATENT ABSTRACTS OF JAPAN vol. 1999, no. 01, 29 January 1999 (1999-01-29) -& JP 10 263348 A (TOYO ROKI SEIZO KK), 6 October 1998 (1998-10-06)

## Description

### Field of the Invention:

The present invention is directed to filter elements having injection molded thermoplastic seals and methods of making such filters. More particularly, the present invention is directed to filter elements having generally planar filter media packs which are usually polygonal, wherein thermoplastic elastomer seals are molded thereon.

### Background of the Invention:

Filter elements include seals for isolating the clean and dirty sides of the filter element from one another so that a fluid such as a gas or liquid does not bypass filter media comprising the filter element The current practice is to use a casting process to fix foamed urethane seals to the filter media. Generally, this is done by injecting a two part liquid such as a polyol and isocyanate mixture into a mold having filter packs encased therein. Under heat the liquid mixture foams to create urethane seals on the filter media packs. The foamed urethane seals are designed to withstand sustained temperatures of about 93.3°C (200°F) and will tolerate up to about 135°C (275°F) for brief periods. Sustained temperatures at the 135°C (275°F) level can cause the seals to become thermoplastic and degrade by

reshaping themselves. This is because the cells of the foamed urethane tend to collapse resulting in the seal becoming a less compressible solid and thus loosing its flexibility. This collapse can reduce the volume of the urethane by 200-300% and thus reduce the effectiveness of initially foamed urethane as a seal. Moreover, urethane seals tend to bond with filter element housings made from NYLON® when subjected to higher temperatures, making it difficult to remove filter elements from NYLON® housings during period maintenance.

An example of a filter element disposed in an injection moulded frame is disclosed in JP 10263348A. Further examples of a filter element disposed in an injection moulded frame are disclosed in US 5,902,361 and US 5,667,545.

According to the present invention, there is provided a filter element comprising a filter media having filter face portions, at least one side portion and a corner portion at which the side portion meets one of the face portions, the filter element further comprising a seal of substantially solid thermoplastic elastomer material (TPE), characterised in that the seal is bonded to the said one face portion at the corner portion and comprises a base portion attached directly to the filter media at the said one face portion by injection moulding, and a bendable contact portion which projects outwardly with respect to a plane defined by the said one face portion for deflection towards the said plane by a housing component adjacent the said one face portion.

Preferred features of the invention are the subject of the dependent claims.

### Brief Description of the Drawings:

Various other features and attendant advantages of the present invention will be more fully appreciated as the same becomes better understood when considered in conjunction with the accompanying drawings, in which like reference characters designate the same or similar parts throughout the several views, and wherein:
Fig. 1 is a side perspective view of a filter element configured In accordance with the principles of the present invention;
Fig. 2 is an end perspective view of the filter element of Fig. 1;
Fig 3 Is a clean-ride face view of the filter element of Figs. 1 and 2;
Fig. 4 is a dirty-side face view of the filter element of Figs. 1-3;
Fig. 5A is an end elevation of a portion of the filter element showing a first embodiment of a seal configured in accordance with the present invention;
Fig. 5B is an end elevation of a second embodiment of a seal configured in accordance with the present invention;
Fig. 5C is an end elevation of a third embodiment of a seal configured in accordance with the present invention;
Fig. 5D is an end elevation of a fourth embodiment of the invention showing a seal molded onto a frame;
Fig. 6 is a view of the portion of the filter element of Fig. 5 showing that portion mounted in a housing with the lid of the housing open;
Fig. 7 is a view similar to Fig. 6 but showing the lid of the housing closed;
Fig. 8 is a schematic side view showing a method of making filter elements in accordance with the principles of the present invention, and
Fig. 9 is a schematic side view showing the method of Fig. 8 including molding a frame around a filter media pack prior to molding a seal thereon.

### Detailed Description of the Drawings:

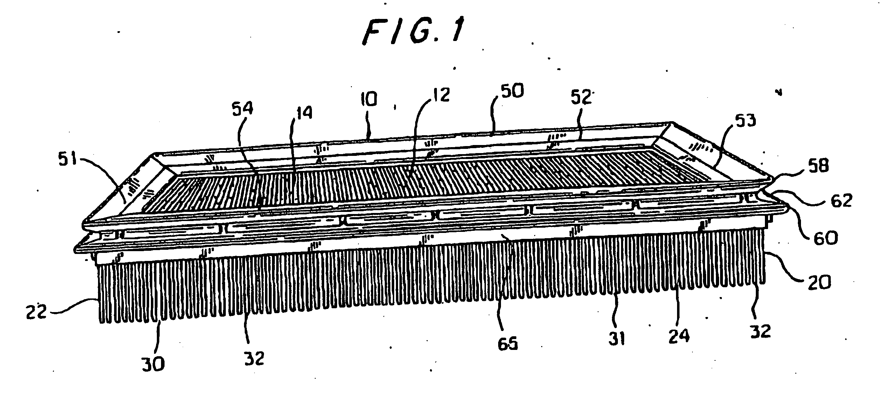

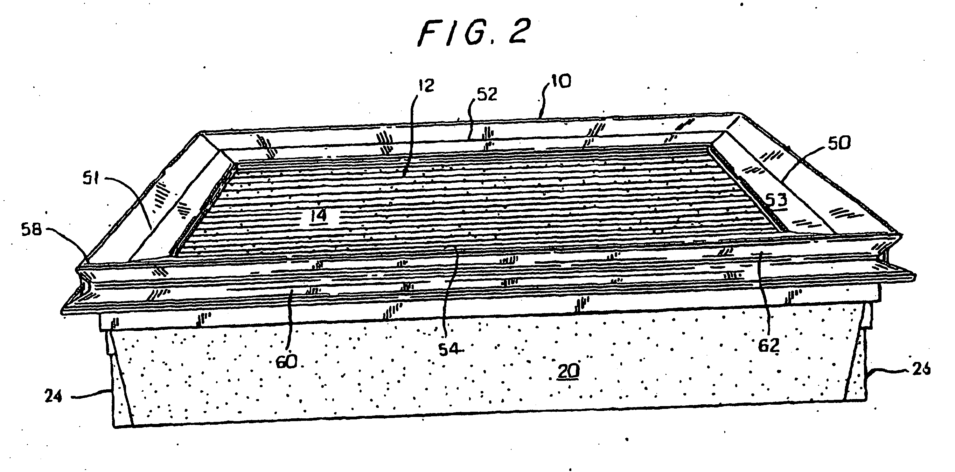

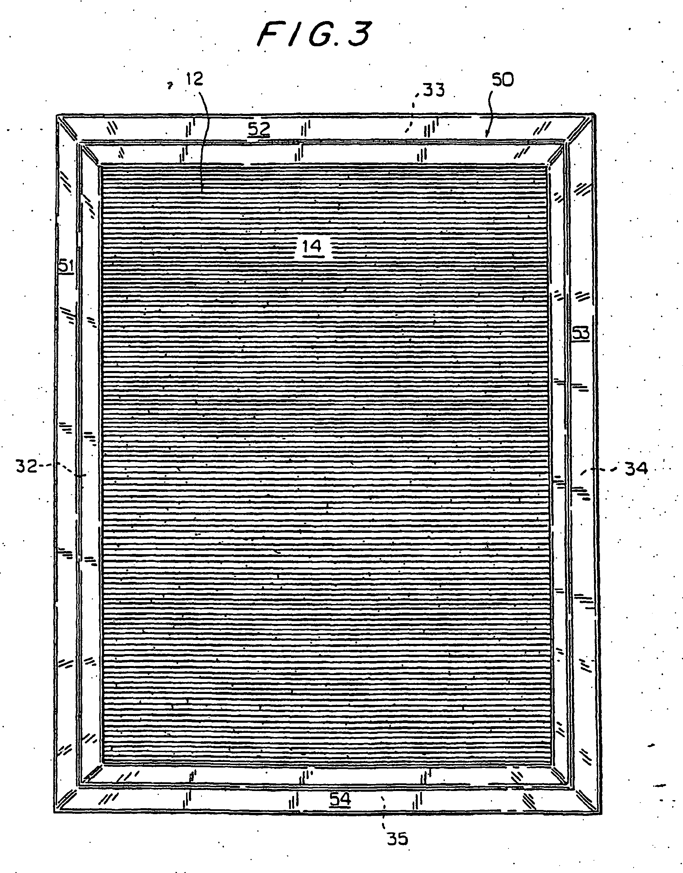

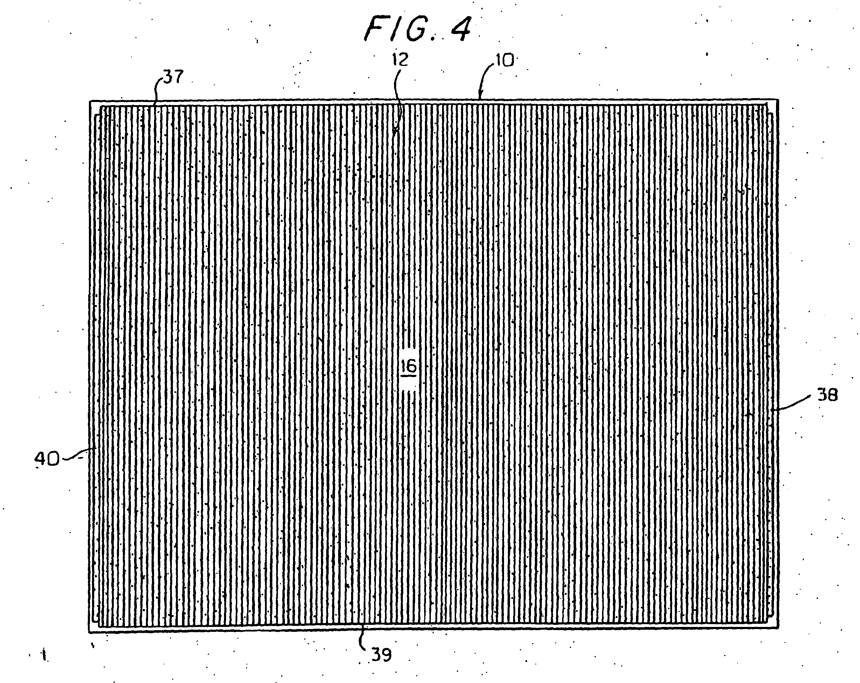

Referring now to Figs. 1-4, there is shown a filter element 10 configured in accordance with the principles of the present invention wherein the filter element has a pleated paper filter media 12 with a clean side face 14 (Fig. 3) and a dirty side face 16 (Fig. 4). The filter media 12 also includes first and second end surfaces 20 and 22 (Fig. 1) and first and second side surfaces 24 and 26 (Fig. 2). The end surfaces 20 and 22 are flat portions of a continuous web 28 of filter media comprising the filter media 12. The side surfaces 24 and 26 extend normal to gaps 30 between adjacent pleats 31 of the filter media.

The end surfaces 20 and 22 and the side surfaces 24 and 26 of the filter media 12 join the clean side face 14 at corner portions 32, 33, 34 and 35, while the dirty side face 16 joins the end surfaces and sides at corner portions 37, 38, 39 and 40.

It is necessary to isolate the clean side face 14 of the filter element 10 from the dirty side face 16 in order to cause all of the fluid passing through the filter element to be filtered by the filter media 12. This is accomplished by a peripheral seal 50 which is disposed through and on the clean side corner portions 32-35.

In the illustrated first embodiment, seal 50 has four sections 52, 53, 54 and 55 which have the same cross sectional configuration. Each of the four sections 52-55 has flexible resilient flanges of solid rather than foamed material that extend both laterally and outwardly with respect to the plane defined by the clean side face 14 of the filter media 12.

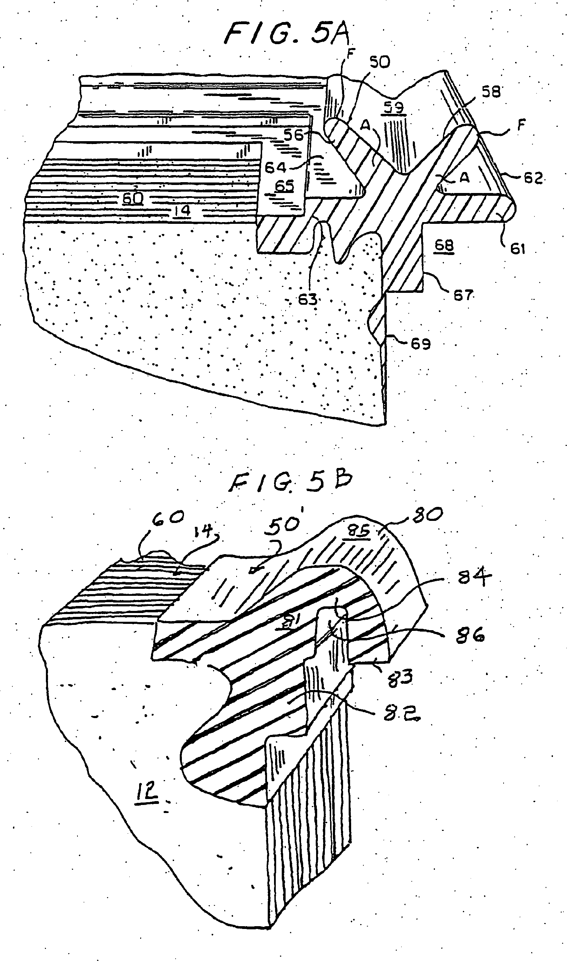

As is seen in Fig. 5A, the seal 50 has a first flexible flange 56 is separated by from a second flexible flange 58 by a gap 59. The first flexible flange 56 extends obliquely and laterally inwardly with respect to a plane 60 defined by the clean side face 14, while the second flexible flange 58 extends obliquely and laterally outwardly with respect to the plane 60. When the flexible flange 56 and 58 are pressed against a surface of a housing the flanges bend away from one another widening the gap 59 with the flange 58 bending.

The second flexible flange 58 is separated by from a third flexible flange 61 by a gap 62 while the first flexible flange 56 is separated from a fourth flange 63 by a triangular gap 64. Injection molded material 65 from the fourth flange 63 extends across the clean face 14 of the filter media 14 and into the gaps 32 between the pleats 30. The third flange 61 is separated from a rim 67 of the seal 50 by a notch 68 with a portion 69 of the rim extending into the gaps 32 between the pleats 30.

The fourth flange 63, injection molded material 65, rim 67 and portion 69 of the rim form a base portion B of the seal 50 which is integral with filter media 12 after injection mold. The flexible resilient flanges 56 and 58 provide contact portions C of the seal which have anchor portions A which are unitary with the base portion B and free ends F which are engagable by the lid of the housing. As the lid closes, the flexible resilient flanges 56 and 58 bend with compression against the lid being provided by the bending moment in the flanges.

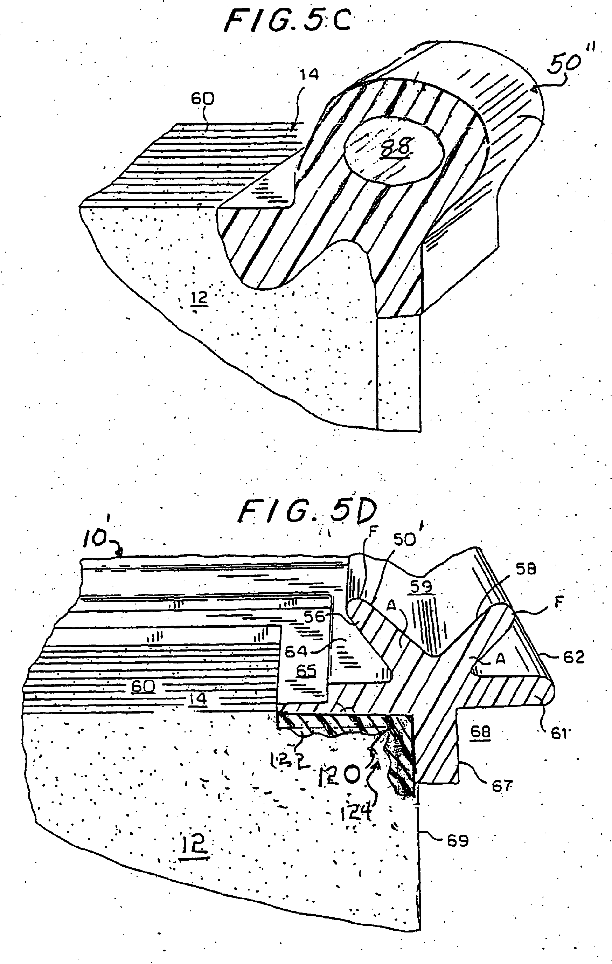

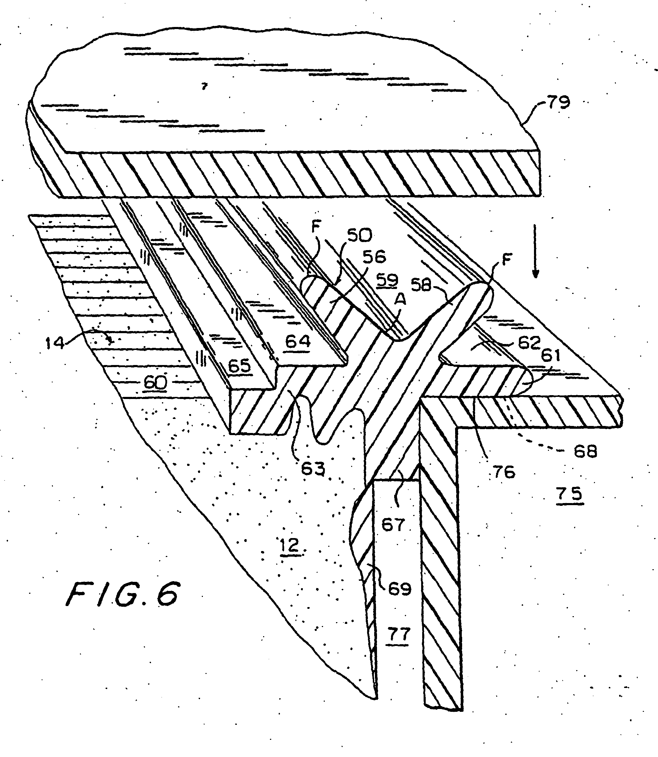

Referring now to Fig. 6 where the portion of the filter element of Fig. 5 is shown mounted in a housing 75, it is seen that a ledge 76 of the housing projects into the notch 68 of the seal 58 so that the third flange 61 of the filter element 50 rests on the ledge 76 of the housing 75 with the filter media 12 extending into the opening 77 through the housing.

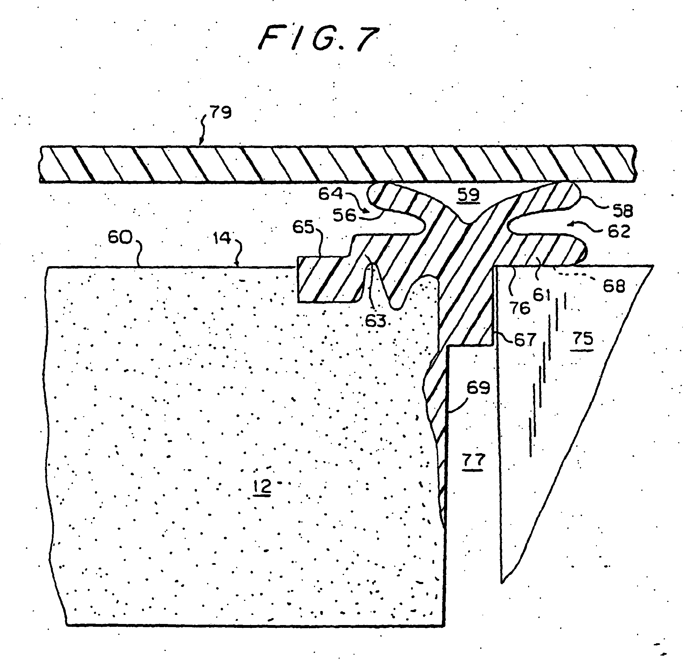

Referring now to Fig. 7, where the lid 79 of the housing closes, the first and second flexible flanges 56 and 58 bend toward the fourth flange 63 and the third flange 61, respectively, widening the triangular gap 59 and narrowing the triangular gaps 62 and 64. The pressure of the lid 79 against the first and second flanges 56 and 58 urges the third flange 61 against the ledge 76 of the housing, further sealing the clean side 14 of the filter element 10 from the dirty side 16.

The seal 50 is solid without the cells of prior art seals, so that the first and second flanges 56 and 58 provide contact portions of the seal which bend and assert compression against the lid 79 due to bending moments because force from the lid is applied to the free ends F of the first and second flanges. While two flanges are shown, a seal could also be accomplished with a single flange or with another configuration of contact portions the seal which rely on bending rather than compression of the seal material itself. Examples of other configurations for contact portions are circular, oval or polygonal contact portions.

Fig. 5B shows a U-shaped contact portion 80 having a first leg 81 extending from and unitary with a base portion 82 of a seal 50' and a second leg 83 connected by a bight 84 to the first leg. Upon engaging the outer surface 85 of contact portion 80 with the lid 79 of the housing 75 (see Fig. 7), the bight 84 bends because the second leg 83 deflects toward the first leg 81 into the gap 86 therebetween.

Fig. 5C shows a third embodiment of a seal, seal 50", configured in accordance with the present invention, wherein the seal 50" is hollow, preferably without a vent opening therein. The hollow seal 50" has continuous void 88, which is preferably round or oval in cross section, and which deforms in a radial direction when compressed by a housing cover.

In accordance with the present invention, the seal 50 is preferably comprised of a thermoplastic elastic material (TPE) such as thermoplastic particles embedded in ethylene-polylene terpolymer rubber (EPDM). While this type of material is preferred, other elastic and resilient thermoplastic materials which are capable of being injection molded on and into the corners, 32, 33, 34 and 35 at the periphery of the filter media pack 12 may be used.

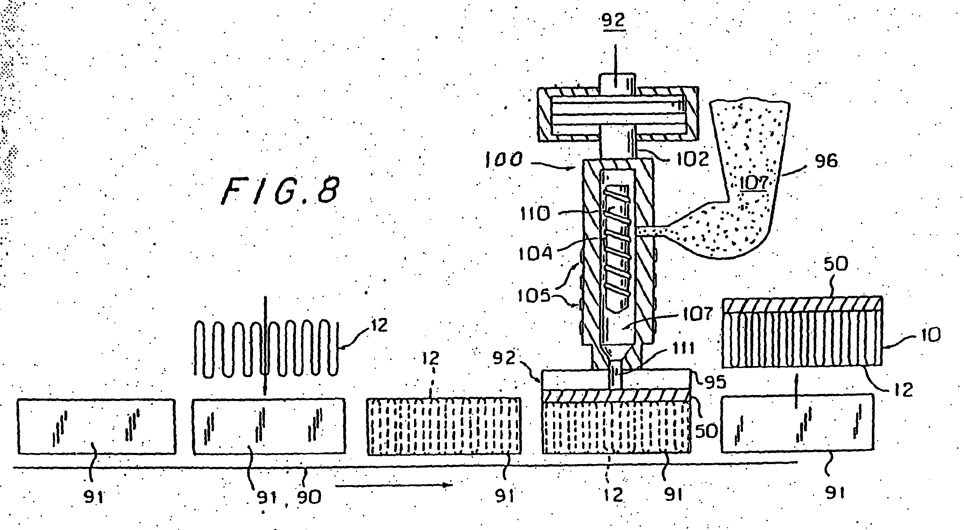

Referring now to Fig. 8, there is shown apparatus for making the filter element 10 shown in Figs. 1-4 according to a method of the present invention, wherein a production run for numerous filter elements 10 is illustrated. Apparatus for practicing the method of the invention includes a conveyer 90 on which is mounted the bottom section 91 of a two-section mold 92. The pleated filter media 12 is inserted into the bottom mold section 91 prior to, or in conjunction with, mounting a seal mold section 95 on the bottom mold section 91. In another arrangement, the seal mold section 95 may be integral with injection molding machine 100 (as shown) and the bottom mold section 91 may simply be advanced into alignment with the seal mold section 95 with the mold 92 being shut at an injection molding station 102.

In the injection molding machine 100, a barrel 104 is heated by heaters 105 while solid thermoplastic pellets are fed into the barrel 104 from a hopper 106. The thermosetting material 107 of the pellets is carried by a screw 110 within the barrel 104 down to a nozzle portion 111 of the barrel for injection into the seal mold section 95, which shapes the seal 50 as a ram 102 injects the molten material 107 into the seal mold section 95. It takes approximately thirty seconds for the seal 50 to cool and solidify. The mold 92 is then opened by separating the seal mold section 95 from the bottom mold section 91 and the finished filter element 10, comprised of the filter media 12 and seal 50, is ejected from the bottom mold section 91.

A subsequent bottom mold 91 carrying another filter media pack 12 is then aligned and closed by the second section 95. Approximately thirty seconds later, a second complete filter element 10 comprised of a filter media 12 and seal 50 is ejected.

Referring now to Fig. 5D there is disclosed a fourth embodiment of the invention wherein a rigid frame 120 is molded onto the filter media pack 12 prior to molding the seal 50' to create the filter element 10'. The rigid frame 120 has portions which flowed between the pleats of the pleated filter media 12 and adhered to the panels thereof adjacent the top corner 124 of the filter media. The rigid frame 120 is relatively hard and is made of a thermoplastic material such as polypropylene, polyurethane or polyethylene. When the seal 50' is ejected over the frame 120, the seal adheres to the frame. This results in a relatively stiff filter element 10'.

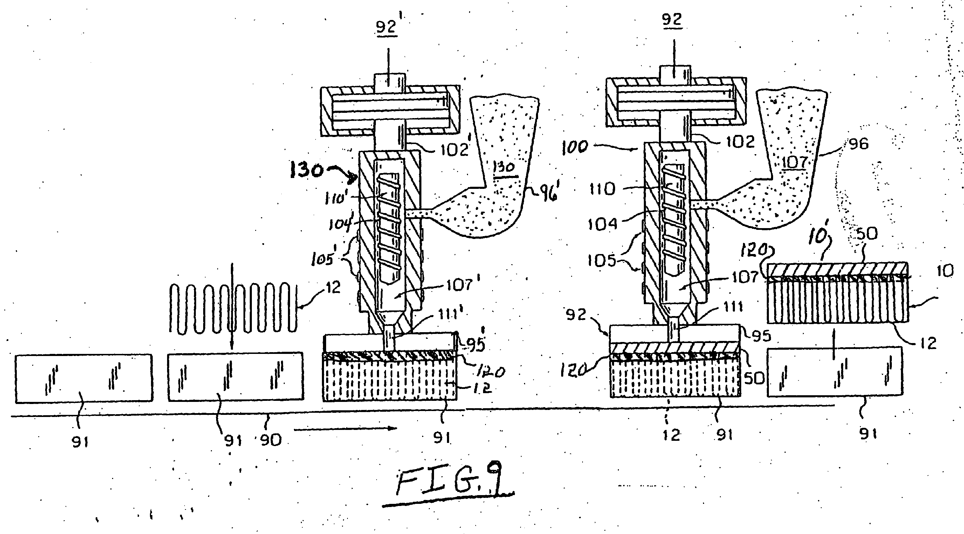

Referring now to Fig. 9 there is shown a method of making the filter element 10' of Fig. 5D, wherein an injection molding machine 130, configured like the previously described injection molding machine 100, injects molten material 132, such as polypropylene, polyurethane or polyethylene onto the filter pack 12 to form the frame 120. The mold section 95' distributes the molten material 132 along and around the upper edge 124 of the filter pack 12. After solidifying, the frame 120, receives the sealing material 107 thereon which is injected by the injection molding machine 100. The resulting filter element 10', rigidified by the frame 120, is then ejected from the bottom mold section 91.

The filter element is configured to accommodate the shape of the filter element housing, which, housing may be configured to save space and to nest within a convenient location with respect to an engine.

While a rectangular panel filter element is disclosed as produced and configured in accordance with the principles of the present invention, the filter element may have other than a rectangular or square shape. For example, the filter element many be circular, triangular, or be polygonal with more than four sides, such as generally rectangular filter element with having an additional short side or corner side for filter element orientation.

The filter element may also be annular with the seals being disposed at one or both end faces by utilizing thermal setting materials which have been injection molded onto the annular filter media. While pleated cellulose or cellulose blend filter media is disclosed In the embodiment of this application, other types of filter media which have woven or non-woven polymer strand filter media (such as polyester or polypropylene strands) or foam-type filter media may utilize injection molded thermoplastic seals as set forth in this invention.

From the foregoing description, one skilled in the art can easily ascertain the essential characteristics of this invention, and can make various changes and modifications of the invention to adapt it to various usages and conditions within the scope of the claims.

## Claims

1. A filter element (10) comprising a filter media (12) having filter face portions (14, 16), at least one side portion (20, 22, 24, 26) and a corner portion (32, 33, 34, 35) at which the side portion (20, 22, 24, 26) meets one of the face portions (14), the filter element further comprising a seal (50, 50', 50") of substantially solid thermoplastic elastomer material (TPE), **characterised in that** the seal (50, 50', 50") is bonded to the said one face portion (14) at the corner portion (32, 33, 34, 35) and comprises a base portion (63, 82) attached directly to the filter media (12) at the said one face portion (14) by injection moulding, and a bendable contact portion (54, 56, 58, 80) which projects outwardly with respect to a plane defined by the said one face portion (14) for deflection towards the said plane by a housing component adjacent the said one face portion (14).

2. A filter element (10) as claimed in any one of the preceding claims, **characterised in that** the contact portion (56, 58) includes a pair of flexible flange portions that extend obliquely in divergent directions from the base portion (63).

3. A filter element (10) as claimed in any one of the preceding claims, **characterised in that** a rim portion (67) is bonded to a perimeter of the filter media (12), the perimeter of the filter media (12) including at least one side surface of the filter media (12), wherein the rim portion (67) is adapted to radically engage and seal an inner surface of a filter housing (75).

4. A filter element (10) as claimed in claim 3, **characterised in that** the seal (50) includes a second flange portion (61) integrally-extending from the base portion (63) in a perpendicular direction with respect to the at least one side surface of the filter media (12), wherein the second flange portion (63) is adapted to overlay and seal a ledge (76) of a filter housing (75).

5. A filter element (10) as claimed in any one of the preceding claims, **characterised in that** the filter media (12) is a pleated material including cellulose, cellulose blends, polyester fibers, or polypropylene fiber.

6. A filter element (10) as claimed in any one of the preceding claims, **characterised in that** the material of the seal (50, 50', 50") includes thermoplastic vulcanized particles (TPV) embedded in ethylene-propylene terpolymer rubber (EPDM).

7. A method for manufacturing a filter element (10) according to claim 1 comprising the steps of:
inserting a filter media (12) including a first material into an injection molding machine (100), wherein the filter media (12) includes a clean side face (14); injecting and bonding a second material (107) directly onto a perimeter of the clean side face (14);
forming a base portion (63, 82) of a seal (50, 50', 50") from the second material (107) that is integral with the filter media (12), **characterised in that**:
forming, with the second material (107), a bendable contact portion (54, 56, 58, 80) which projects outwardly with respect to a plane defined by the said one face portion (14) for deflection towards the said plane by a housing component adjacent the said one face portion (14).

8. A method as claimed in claim 7, **characterised in that** a rim portion (67) is formed from the second material (107), wherein the rim portion (67) is bonded to a perimeter of the filter media (12), wherein the perimeter of the filter media (12) includes at least one side surface of the filter media (12).

9. A method as claimed in claim 7, **characterised in that** a second flange portion (61) is formed from the second material (107) that integrally-extends from the flange portion (63) in a perpendicular direction with respect to the least one side surface of the filter media (12), wherein the second flange portion (61) is adapted to overlay and seal a ledge (76) of a filter housing (75).

## Patentansprüche

1. Filterelement (10), welches ein Filtermedium (12) mit einem Filterfrontteil (14,16) umfasst, zumindest ein Seitenteil (20,22,24,26) und ein Eckteil (32,33,34,35), an welchem das Seitenteil (20,22,24,26) mit einem der Frontteile (14) zusammentrifft, wobei das Filterelement weiterhin eine Dichtung (50, 50' , 50") aus im Wesentlichen festem thermoplastischem Elastomermaterial (CPE) umfasst,
**dadurch gekennzeichnet, dass**
die Dichtung (50,50',50") mit dem einen Frontteil (14) an dem Eckteil (32,33,34,35) verbunden ist und ein Basisteil (63,82) umfasst, welches direkt an dem Filtermittel (12) an dem einen Frontteil (14) durch ein Spritzgussverfahren angebracht ist und ein biegbares Kontaktierteil (54,56,58,80), welches sich relativ zu einer Ebene, die durch das eine Frontteil (14) bestimmt ist, nach aussen hin erstreckt zur Durchbiegung in Richtung auf die Ebene durch ein Gehäusebauteil in der Nähe des einen Frontteils (14).

2. Filterelement (10), nach einem der vorhergehenden Ansprüche,
**dadurch gekennzeichnet dass** das Kontaktierteil (56,58) ein Paar von flexiblen vorstehenden Randteilen aufweist, welche sich schräg in auseinanderlaufenden Richtungen von dem Basisteil (63) erstrecken.

3. Filterelement (10), nach einem der vorhergehenden Ansprüche,
**dadurch gekennzeichnet, dass** ein Kantenteil (67) am Umfang des Filtermittels (12) angebracht ist, wobei der Umfang des Filtermittels (12) zumindest eine Seitenoberfläche des Filtermittels (12) aufweist, worin das Kantenteil (67) derart angepasst ist, um radial mit einer inneren Oberfläche des Filtergehäuses (75) zusammenzuwirken und abzudichten.

4. Filterelement (10), nach Anspruch 3,
**dadurch gekennzeichnet, dass** die Dichtung (50) ein zweites vorstehendes Randteil (61) umfasst, welches sich integral von dem Basisteil (63) in eine relativ zu der zumindest einen Seitenoberfläche des Filtermittels (12) senkrecht liegende Richtung erstreckt, worin das zweite vorstehende Randteil (63) derart ausgelegt ist um einen Absatz (76) des Filtergehäuses (5) zu überlagern.

5. Filterelement (10), nach einem der vorhergehenden Ansprüche,
**dadurch gekennzeichnet, dass** das Filtermittel (12) ein gefaltetes Material ist, dass Zellulose aufweist, Zellulosegemische, Polyesterfasern oder Polypropylenfasern.

6. Filterelement (10), nach einem der vorhergehenden Ansprüche,
**dadurch gekennzeichnet, dass** das Material der Dichtung (50, 50', 50") thermoplastische vulkanisierte Teilchen (TPV) aufweist, welche in Ethylen - Propylen - Terpolymergummi (EPDM) eingebettet sind.

7. Verfahren zur Herstellung eines Filterelementes (10) nach Anspruch 1, welches folgende Schritte aufweist: Einführen eines Filtermittels (12) umfassend ein erstes Material in eine Spritzgussmaschine (100), worin das Filtermittel (12) eine glatte Seitenfläche (14) aufweist; Injektion und Befestigung eines zweiten Materials (107) direkt an einem Umfang der glatten Seitenfläche (14); Ausbildung eines Basisteils (63,82) der Dichtung (50,50',50") aus dem zweiten Material (107), welches integral mit dem Filtermittel (12) vorliegt,
**dadurch gekennzeichnet, dass** mit dem zweiten Material (107) ein biegbares Kontaktierteil (54,56,58,80) ausgebildet wird, welches sich nach aussen hin erstreckt, relativ zu einer Ebene, die durch das eine Flächenteil (14) zur Biegung in Richtung auf die Ebene durch einen Gehäusebestandteil in der Nähe des einen Flächenteils (17) definiert ist.

8. Verfahren nach Anspruch 7,
**dadurch gekennzeichnet, dass** ein Randteil (67) mit dem zweiten Material (107) dargestellt ist, worin das Randteil (67) mit dem Filtermittels (12) an einem Umfang verbunden ist, worin der Umfang des Filtermittels (12) zumindest eine Seitenoberfläche des Filtermittels (12) umfasst.

9. Verfahren nach Anspruch 7,
**dadurch gekennzeichnet, dass**
ein zweites vorstehendes Randteil (61) aus dem zweiten Material (107) ausgebildet ist, welches sich integral von dem vorstehenden Teil (63) erstreckt, in einer Richtung, die relativ zu der zumindest einen Seitenoberfläche des Filtermittels (12) senkrecht ist, worin das zweite vorstehende Randteil (61) derart angepasst ist um den Absatz (76) des Filtergehäuses (75) zu überlagern und abzudichten.

## Revendications

1. Élément filtrant (10) comprenant une couche filtrante (12) ayant des parties frontales filtrantes (14, 16), au moins une partie latérale (20, 22, 24, 26) et une partie d'angle (32, 33, 34, 35) au niveau de laquelle la partie latérale (20, 22, 24, 26) rencontre une des parties frontales (14), l'élément filtrant comprenant en outre un joint (50, 50', 50") en une matière élastomère thermoplastique (TPE) sensiblement solide, **caractérisé en ce que** le joint (50, 50', 50") est lié à ladite une partie frontale (14) au niveau de la partie d'angle (32, 33, 34, 35) et comprend une partie de base (63, 82) fixée directement à la couche filtrante (12) au niveau de ladite une partie frontale (14) par moulage par injection, et une partie de contact pliable (54, 56, 58, 50) qui fait saillie vers l'extérieur par rapport à un plan défini par ladite une partie frontale (14) pour déviation vers ledit plan par un composant de logement adjacent à ladite une partie frontale (14).

2. Élément filtrant (10) selon l'une quelconque des revendications précédentes, **caractérisé en ce que** la partie de contact (56, 58) comprend une paire de parties de bordure flexibles qui s'étendent obliquement dans des directions divergentes depuis la partie de base (63).

3. Élément filtrant (10) selon l'une quelconque des revendications précédentes, **caractérisé en ce qu'**une partie de rebord (67) est liée à un périmètre de la couche filtrante (12), le périmètre de la couche filtrante (12) comprenant au moins une surface latérale de la couche filtrante (12), dans lequel la partie de rebord (67) est adaptée pour se mettre en prise radialement avec une surface interne d'un logement de filtre (75) et la sceller.

4. Élément filtrant (10) selon la revendication 3, **caractérisé en ce que** le joint (50) comprend une seconde partie de bordure (61) s'étendant intégralement à partir de la partie de base (63) dans une direction perpendiculaire par rapport à l'au moins une surface latérale de la couche filtrante (12), dans lequel la seconde partie de bordure (63) est adaptée pour recouvrir et sceller un épaulement (76) d'un logement de filtre (75).

5. Élément filtrant (10) selon l'une quelconque des revendications précédentes, **caractérisé en ce que** la couche filtrante (12) est une matière plissée comprenant de la cellulose, des mélanges de cellulose, des fibres de polyester ou des fibres de polypropylène.

6. Élément filtrant (10) selon l'une quelconque des revendications précédentes, **caractérisé en ce que** la matière du joint (50, 50', 50") comprend des particules vulcanisées thermoplastiques (TPV) logées dans du caoutchouc therpolymère d'éthylène-propylène (EPDM).

7. Procédé de fabrication d'un élément filtrant (10) selon la revendication 1, comprenant les étapes consistant à : insérer une couche filtrante (12) comprenant une première matière dans une machine de moulage par injection (100), dans laquelle la couche filtrante (12) comprend une face latérale propre (14) ; injecter et lier une seconde matière (107) directement sur un périmètre de la face latérale propre (14) ; former une partie de base (63, 82) d'un joint (50, 50', 50") à partir de la seconde matière (107) qui est d'un seul tenant avec la couche filtrante (12), **caractérisé par** :
la formation, avec la seconde matière (107), d'une partie de contact pliable (54, 56, 58, 80) qui fait saillie vers l'extérieur par rapport à un plan défini par ladite une partie frontale (14) pour dévier vers ledit plan par un composant de logement adjacent à ladite une partie frontale (14).

8. Procédé selon la revendication 7, **caractérisé en ce qu'**une partie de rebord (67) est formée à partir de la seconde matière (107), dans lequel la partie de rebord (67) est liée à un périmètre de la couche filtrante (12), dans lequel le périmètre de la couche filtrante (12) comprend au moins une surface latérale de la couche filtrante (12).

9. Procédé selon la revendication 7, **caractérisé en ce qu'**une seconde partie de bordure (61) est formée à partir de la seconde matière (107) qui s'étend d'un seul tenant à partir de la partie de bordure (63) dans une direction perpendiculaire par rapport à l'au moins une surface latérale de la couche filtrante (12), dans lequel la seconde partie de bordure (61) est adaptée pour recouvrir et sceller un épaulement (76) d'un logement de filtre (75).
